# FASCICULE DE BREVET EUROPEEN

(11) **EP 1 602 871 B1**
(45) Date de publication et mention de la délivrance du brevet: **22.11.2006**
(21) Numéro de dépôt: 05291114.6
(22) Date de dépôt: 24.05.2005
(51) Int. Cl.: F16L 37/098, F16L 37/113

(54) **Dispositif d'assemblage de tuyaux**
Rohrverbindungsanordnung
Pipe assembly

(30) Priorité: 01.06.2004 FR 0405897
(43) Date de publication de la demande: 07.12.2005
(73) Titulaire: Participation Gestion Développement Industriel - P.G.D.I.-S.A., 35760 Saint-Grégoire (FR)
(72) Inventeur: Renson, Francois, 35137 Pleumeleuc (FR)
(74) Mandataire: Maillet, Alain

(56) Documents cités:
- EP-A- 0 797 038
- FR-A- 1 585 236
- US-A- 4 696 497
- US-A- 5 988 704

## Description

La présente invention concerne un dispositif d'assemblage de tuyaux. Plus précisément, elle concerne un dispositif permettant d'assembler deux tuyaux à base circulaire après emboîtement d'une partie d'extrémité mâle d'un premier tuyau dans une partie d'extrémité femelle d'un second tuyau.

Un dispositif d'assemblage mâle-femelle de deux tuyaux selon le préambule de la revendication 1 est connue du document EP-A-797 038.

Des conduits adaptés à véhiculer des corps fluides tels que des gaz ou des liquides peuvent être constitués d'un assemblage de tuyaux cylindriques de mêmes diamètres mis bout à bout. Un mode d'assemblage de tuyaux, utilisé par exemple dans le domaine des conduits destinés à véhiculer des gaz de combustion provenant d'un appareil de chauffage à combustion, consiste à ménager aux extrémités de chacun des tuyaux à assembler, des moyens d'assemblage permettant un assemblage des tuyaux par emboîtement. Une partie d'extrémité formant pièce femelle est adaptée à recevoir une partie d'extrémité formant pièce mâle. Ces parties d'extrémité ont généralement des formes cylindriques de diamètres supérieurs à celui du corps des tuyaux, le diamètre de la partie d'extrémité mâle étant inférieur au diamètre de la partie d'extrémité femelle.

Les parties d'extrémité mâle et femelle étant emboîtées l'une dans l'autre, l'assemblage définitif des tuyaux n'est réalisé que par la mise en place d'un dispositif de maintien des tuyaux ensemble. Ce maintien est par exemple habituellement réalisé par la pose d'un collier de sécurité, la mise en place de vis auto-foreuses ou de rivets borgnes, etc.

Ces dispositifs de maintien possèdent des inconvénients. En effet, il est souvent difficile pour la personne en charge de l'assemblage des tuyaux de maintenir les tuyaux emboîtés tout en installant le moyen de maintien choisi. En outre, ces moyens de maintien sont des pièces supplémentaires qui ont un coût supplémentaire de matière première et de main d'oeuvre non négligeable.

Le but de l'invention est de proposer un dispositif d'assemblage de tuyaux n'ayant pas les inconvénients précédemment décrits.

A cet effet, la présente invention concerne un dispositif d'assemblage d'un tuyau d'extrémité mâle et d'un tuyau d'extrémité femelle prévus pour s'emboîter l'un dans l'autre par leurs extrémités respectives, ledit dispositif comportant des moyens de maintien desdits tuyaux dans une position où ils sont emboîtés. Le dispositif se caractérise en ce que lesdits moyens de maintien appartiennent auxdits tuyaux.

L'avantage d'avoir des moyens de maintien directement montés sur les tuyaux est de faciliter l'assemblage des tuyaux entre eux, en permettant ce montage par une seule personne et ainsi de réduire les coûts de main d'oeuvre et également de réduire les coûts des pièces.

Selon un mode de réalisation particulier de l'invention, lesdits moyens de maintien sont prévus pour permettre la rotation du tuyau d'extrémité mâle et du tuyau d'extrémité femelle l'un par rapport à l'autre lorsqu'ils sont emboîtés l'un dans l'autre.

L'avantage d'avoir des moyens de maintien qui permettent la rotation des tuyaux l'un par rapport à l'autre est de faciliter l'orientation d'éventuels accessoires (coudes, piquage, trappe de visite, ...) installés sur le parcours du conduit formé par ces tuyaux.

Selon un mode de réalisation préféré de l'invention, le tuyau d'extrémité mâle et le tuyau d'extrémité femelle comportent chacun une paroi verticale externe et une paroi verticale interne, lesdits moyens de maintien étant formés, d'une part, par des ergots prévus sur l'extrémité de la paroi verticale externe du tuyau d'extrémité mâle et, d'autre part, par un dispositif de blocage prévu sur l'extrémité de la paroi verticale interne du tuyau d'extrémité femelle, ledit dispositif de blocage étant prévu pour pouvoir se déformer de manière à autoriser le passage des ergots lors de l'emboîtement des tuyaux et pour pouvoir reprendre sa forme initiale de manière à interdire le passage des ergots en sens inverse après emboîtement desdits tuyaux.

L'association d'ergots et d'un dispositif de blocage permet un assemblage des tuyaux à la fois simple et rapide. En outre, la fabrication de ces moyens de maintien est également simple et peu coûteuse.

Selon un mode de réalisation avantageux de l'invention, ledit dispositif de blocage est formé par l'extrémité dudit tuyau d'extrémité femelle repliée vers ladite paroi verticale interne du tuyau d'extrémité femelle, le bord de cette extrémité étant prévu pour interdire le passage des ergots en sens inverse après emboîtement desdits tuyaux.

Le bord de l'extrémité du tuyau d'extrémité femelle est utilisé à la manière d'un hameçon et assure ainsi un assemblage efficace des tuyaux.

Avantageusement, ledit dispositif de blocage comporte une partie conique incluant ledit bord de l'extrémité.

Selon un autre mode de réalisation préféré de l'invention, les ergots sont des bossages formés sur l'extrémité du tuyau d'extrémité mâle et bombés vers l'extérieur de ce tuyau.

Les ergots sont des moyens simples à réaliser n'entraînant pas de surcoûts.

Selon un mode de réalisation particulier de l'invention, le dispositif de blocage comporte des encoches de dimensions prévues pour permettre le passage des ergots en sens inverse de manière à rendre possible le désassemblage des tuyaux sans entraîner de dégradations.

Les encoches sont un moyen simple à fabriquer et à utiliser pour permettre le désassemblage des tuyaux.

Selon un autre mode de réalisation avantageux de l'invention, lesdites encoches sont formées dans ladite partie conique.

Selon un autre mode de réalisation avantageux de l'invention, le tuyau d'extrémité femelle comporte des marques de repérage des encoches et le tuyau d'extrémité mâle comporte des marques de repérage des ergots, lesdites marques de repérage étant prévues pour permettre, par leur alignement, la mise en correspondance des encoches et des ergots de manière à faciliter un éventuel désassemblage des tuyaux.

Les marques de repérage permettent de retrouver rapidement l'emplacement des ergots et des encoches afin de faciliter le désassemblage des tuyaux.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en demi-coupe longitudinale d'une extrémité mâle d'un premier tuyau et d'une extrémité femelle d'un second tuyau ;
la Fig. 2 représente une vue en demi-coupe longitudinale de l'assemblage d'une extrémité mâle d'un premier tuyau avec une extrémité femelle d'un second tuyau formant un conduit simple paroi ; et
la Fig. 3 représente une vue en demi-coupe longitudinale de l'assemblage deux à deux d'extrémités mâles et femelles de tuyaux destinés à former un conduit externe et un conduit interne d'un conduit double paroi.

La présente invention s'applique à un conduit métallique modulaire simple ou double paroi de forme générale cylindrique circulaire. Ce conduit peut être destiné à véhiculer des gaz de combustion, d'autres types de gaz, des liquides et/ou des particules solides produits par des générateurs industriels de chauffage, des incinérateurs ou des chaudières, etc.

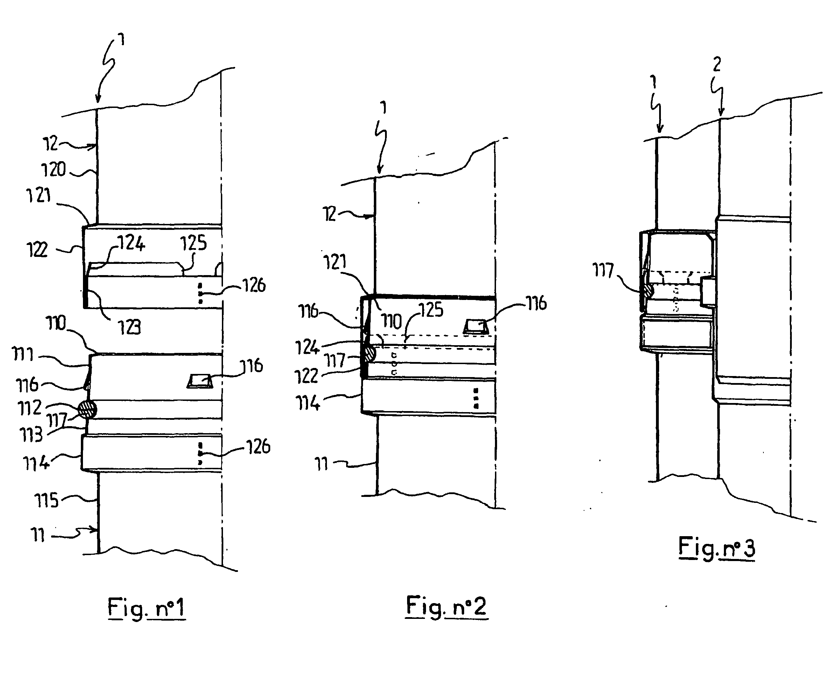

Un mode de réalisation préféré de l'invention est représenté à la Fig. 1. Sur cette Fig. 1, un conduit 1 comporte un premier tuyau 11 pourvu d'une extrémité mâle et un second tuyau 12 pourvu d'une extrémité femelle. Chacun de ces tuyaux 11 et 12 est réalisé par découpage d'un flanc de tôle, pliage du flanc de tôle en un cylindre et soudage des extrémités jointes de ce flanc. Ainsi, chaque tuyau 11 ou 12 comporte une paroi externe et une paroi interne. Les formes définitives des extrémités mâle et femelle des tuyaux 11 et 12 sont ensuite réalisées par expansion de l'extrémité de chacun des tuyaux.

Le tuyau 11 d'extrémité mâle comporte une extrémité formée de préférence par un premier bord circulaire 110, suivi d'un premier anneau 111. Le premier anneau 111 dispose d'une paroi externe verticale ou légèrement conique. Le premier anneau 111 est suivi d'une gorge circulaire creuse 112 pouvant accueillir un joint d'étanchéité 117, d'un second anneau 113 de diamètre similaire à celui du premier anneau 111 et également vertical ou légèrement conique, d'un troisième anneau 114 de diamètre légèrement supérieur aux premier et second anneaux 111 et 113. L'extrémité se termine par un tuyau 115 proprement dit de diamètre inférieur aux diamètres des parties d'extrémité précédemment décrites. Des ergots 116 formant bossages proéminents sont formés sur le premier anneau 111 du tuyau 11 d'extrémité mâle. Leur surface en proéminence est de préférence inclinée en direction du bord 110. Ces ergots 116 sont régulièrement répartis à la périphérie de l'anneau 111. Le nombre des ergots 116 varie en rapport avec le diamètre du tuyau 11 choisi.

Le tuyau 12 d'extrémité femelle comporte à l'extrémité d'un tuyau 120 de diamètre similaire au diamètre du tuyau 115, une partie d'extrémité composée d'un bord 121 oblique et d'une paroi annulaire 122 verticale ou légèrement conique. La paroi 122 comporte un dispositif de blocage de préférence formé par pliage de l'extrémité du tuyau 12 d'extrémité femelle vers l'intérieur de ce tuyau 12 d'extrémité femelle en une première paroi annulaire 123 et une seconde paroi conique 124 inclinée vers l'intérieur.

Les ergots 116 forment avec le dispositif de blocage des moyens de maintien mécanique des tuyaux 11 et 12.

L'assemblage des tuyaux est effectué de la manière suivante. Le tuyau 11 d'extrémité mâle et le tuyau 12 d'extrémité femelle positionnés dans une même direction sont approchés l'un de l'autre. Ce rapprochement des tuyaux entre eux peut s'effectuer en maintenant le tuyau 11 d'extrémité mâle, puis en amenant le tuyau 12 d'extrémité femelle à s'emboîter sur le tuyau 11 d'extrémité mâle ou inversement. On notera qu'au moment de l'emboîtement, le tuyau 11 d'extrémité mâle est tel que les ergots 116 sont positionnés de manière quelconque. Ainsi, lorsque les extrémités des tuyaux 11 et 12 sont emboîtées, les ergots 116 du tuyau 11 d'extrémité mâle trouvant appui contre la paroi conique 124 du dispositif de blocage du tuyau 12 d'extrémité femelle, repoussent cette paroi 124 afin d'assurer leur passage, puis libèrent la paroi 124 une fois la paroi passée et les tuyaux 11 et 12 emboîtés. La paroi 124 ayant repris sa forme initiale, les ergots ne peuvent plus alors effectuer le passage de la paroi en sens inverse, les ergots reposant sur le bord de la paroi 124 (voir Fig. 2). Les tuyaux sont alors assemblés de manière permanente grâce aux moyens de maintien constitués par les ergots 116 et le dispositif de blocage.

Dans cette position, le bord 121 approche du bord 110 et l'extrémité repliée de la paroi 122 approche de l'anneau 114. Les tuyaux 11 et 12 sont maintenus longitudinalement, mais conservent la possibilité d'entrer en rotation l'un par rapport à l'autre.

Dans un mode de réalisation avantageux de l'invention, des encoches 125 sont régulièrement réparties à la périphérie de la paroi conique 124 du tuyau 12 d'extrémité femelle. Le nombre, le positionnement et les dimensions de ces encoches 125 sont prévus pour être en correspondance avec le nombre, le positionnement et les dimensions des ergots 116 du tuyau 11 d'extrémité mâle.

Des marques de repérage 126 sont prévues à l'extérieur de la paroi 122 du tuyau 12 d'extrémité femelle dans des zones correspondant à l'emplacement des encoches 125 de manière à permettre un repérage plus aisé de ces encoches 125. De même, des marques de repérage 126 sont également prévues à l'extérieur du troisième anneau 114 du tuyau 11 d'extrémité mâle de manière à permettre le repérage de la position des ergots 116.

Dans ce mode de réalisation avantageux de l'invention, les encoches 125 et les marques de repérage 126 sont prévues pour rendre possible le démontage éventuel des tuyaux sans entraîner de modifications géométriques des extrémités des tuyaux mâle

11 et femelle 12 et ainsi autoriser leur réassemblage. Ainsi, lorsque les tuyaux doivent être désassemblés, les marques de repérages 126 du tuyau 11 d'extrémité mâle peuvent être alignées avec celles du tuyau 12 d'extrémité femelle par rotation des tuyaux l'un par rapport à l'autre, ce qui permet d'amener les ergots 116 en correspondance avec les encoches 125. Le désassemblage des tuyaux 11 et 12 est ensuite réalisé sans difficultés en faisant passer les ergots 116 au travers des encoches 125, puis en séparant le tuyau 11 du tuyau 12.

On notera que la position de la gorge 112 en retrait par rapport au bord 110 et aux ergots 116 est avantageusement prévue pour autoriser un désassemblage et un réassemblage du tuyau d'extrémité mâle avec le tuyau d'extrémité femelle 12 sans entraîner de dégradations sur le joint d'étanchéité 117 installé dans cette gorge 112.

On notera encore qu'un dispositif d'assemblage selon l'invention peut être installé aussi bien sur un conduit simple paroi tel que représenté à la Fig. 2 que sur un conduit double paroi tel que représenté à la Fig. 3. Un tel conduit double paroi comporte un conduit extérieur 1 comportant un dispositif d'assemblage selon l'invention et un conduit intérieur simple 2 maintenu de préférence au conduit extérieur 1 par des entretoises.

Selon l'invention, l'emboîtement et le maintien des tuyaux 11 et 12 sont donc réalisés simultanément. Le dispositif d'assemblage selon l'invention permet donc un emboîtement et un maintien des tuyaux à la fois efficaces et aisés à réaliser.

## Revendications

1. Dispositif d'assemblage d'un tuyau d'extrémité mâle (11) et d'un tuyau d'extrémité femelle (12) dans une position où ils sont emboîtés l'un dans l'autre par leurs extrémités respectives, le dispositif comportant des moyens de maintien comprenant, d'une part, par des ergots (116) formés sur l'extrémité externe du tuyau d'extrémité mâle et, d'autre part, par un dispositif de blocage (123, 124) formés sur l'extrémité interne du tuyau d'extrémité femelle (12), ledit dispositif de blocage (123, 124) étant prévu pour pouvoir se déformer de manière à autoriser le passage des ergots (116) lors de l'emboîtement des tuyaux et pour pouvoir reprendre sa forme initiale de manière à interdire le passage des ergots (116) en sens inverse après emboîtement desdits tuyaux, **caractérisé en ce que** le dispositif de blocage comporte en outre des encoches (125) de dimensions prévues pour permettre le passage des ergots (116) en sens inverse de manière à rendre possible le désassemblage des tuyaux sans entraîner de modifications géométriques des extrémités des tuyaux mâle et femelle et ainsi autoriser leur réassemblage.

2. Dispositif d'assemblage selon la revendication 1, **caractérisé en ce que** lesdits moyens de maintien sont prévus pour permettre la rotation du tuyau d'extrémité mâle (11) et du tuyau d'extrémité femelle (12) l'un par rapport à l'autre lorsque ces tuyaux sont emboîtés l'un dans l'autre.

3. Dispositif d'assemblage selon la revendication 1 ou 2, **caractérisé en ce que** ledit dispositif de blocage est formé par l'extrémité dudit tuyau d'extrémité femelle (12) repliée vers l'intérieur du tuyau d'extrémité femelle, le bord de cette extrémité étant prévu pour interdire le passage des ergots en sens inverse après emboîtement desdits tuyaux.

4. Dispositif d'assemblage selon la revendication 3, **caractérisé en ce que** ledit dispositif de blocage comporte une partie conique (124) incluant ledit bord de l'extrémité.

5. Dispositif d'assemblage selon l'une des revendications précédentes, **caractérisé en ce que** les ergots (116) sont des bossages formés sur l'extrémité du tuyau d'extrémité mâle (11) et bombés vers l'extérieur de ce tuyau.

6. Dispositif d'assemblage selon l'une des revendications 4 ou 5, **caractérisé en ce que** lesdites encoches (125) sont formées dans ladite partie conique (124).

7. Dispositif d'assemblage selon l'une des revendications précédentes, **caractérisé en ce que** le tuyau d'extrémité femelle (12) comporte des marques de repérage (126) des encoches et le tuyau d'extrémité mâle (11) comporte des marques de repérage (126) des ergots (116), lesdites marques de repérage (126) étant prévues pour permettre, par leur alignement, la mise en correspondance des encoches (125) et des ergots (116) de manière à faciliter un éventuel désassemblage des tuyaux.

## Claims

1. Device for assembling a pipe with a male end (11) and a pipe with a female end (12) in a position in which they are engaged one in the other by their respective ends, the device comprising holding means comprising firstly lugs (116) formed on the external end of the pipe with the male end and secondly a locking device (123, 124) formed on the internal end of the pipe with the female end (12), said locking device (123, 124) being designed to be able to deform so as to allow the lugs (116) to pass when the pipes are engaged and to be able to return to its initial form so as to prevent the lugs (116) passing in the opposite direction after engagement of said pipes, **characterised in that** the locking device also comprises notches (125) of dimensions designed to allow the lugs (116) to pass in the opposite direction so as to make it possible to disassemble the pipes without causing any geometric modifications to the ends of the male and female pipes and thus allow their reassembly.

2. Assembly device according to claim 1, **characterised in that** said holding means are designed to allow rotation of the pipe with the male end (11) and the pipe with the female end (12) one in relation to the other when these pipes are engaged one in the other.

3. Assembly device according to claim 1 or 2, **characterised in that** said locking device is formed by the end of said pipe with the female end (12) folded towards the inside of the pipe with the female end, the edge of this end being designed to prevent the lugs passing in the opposite direction after engagement of said pipes.

4. Assembly device according to claim 3, **characterised in that** said locking device comprises a conical portion (124) including said edge of the end.

5. Locking device according to one of the preceding claims, **characterised in that** the lugs (116) are bosses formed on the end of the pipe with the male end (11) and curved towards the outside of this pipe.

6. Assembly device according to one of claims 4 or 5, **characterised in that** said notches (125) are formed in said conical portion (124).

7. Assembly device according to one of the preceding claims, **characterised in that** the pipe with the female end (12) comprises aligning marks (126) for the notches and the pipe with the male end (11) comprises aligning marks (126) for the lugs (116), said aligning marks (126) being designed to permit, through their alignment, the corresponding alignment of the notches (125) and the lugs (116) so as to facilitate possible disassembly of the pipes.

## Patentansprüche

1. Vorrichtung zum Zusammenbau eines männlichen Endrohrs (11) und eines weiblichen Endrohrs (12) in einer Position, in der sie mit ihren jeweiligen Enden ineinander gesteckt sind, wobei die Vorrichtung Haltemittel aufweist, umfassend einerseits Haken (116), die am äußeren Ende des männlichen Endrohrs ausgebildet sind, und andererseits eine Feststellvorrichtung (122, 124), die am inneren Ende des weiblichen Endrohrs (12) ausgebildet ist, wobei die Feststellvorrichtung (122, 124) dazu vorgesehen ist, sich derart zu verformen, dass sie den Durchgang der Haken (116) beim Ineinanderstecken der Rohre gestattet und ihre ursprüngliche Form wieder annimmt, um den Durchgang der Haken (116) in umgekehrte Richtung nach dem Ineinanderstecken der Rohre verhindert, **dadurch gekennzeichnet, dass** die Feststellvorrichtung ferner Kerben (125) mit Abmessungen umfasst, die dazu vorgesehen sind, den Durchgang der Haken (116) in umgekehrte Richtung zu ermöglichen, um das Trennen der Rohre zu ermöglichen, ohne zu geometrischen Veränderungen der Enden der männlichen und weiblichen Rohre zu führen und somit ihren neuerlichen Zusammenbau zu gestatten.

2. Vorrichtung zum Zusammenbau nach Anspruch 1, **dadurch gekennzeichnet, dass** die Haltemittel dazu vorgesehen sind, die Drehung des männlichen Endrohrs (11) und des weiblichen Endrohrs (12) zueinander zu ermöglichen, wenn diese Rohre ineinander gesteckt sind.

3. Vorrichtung zum Zusammenbau nach Anspruch 1 oder 2,
**dadurch gekennzeichnet, dass** die Feststellvorrichtung vom Ende des weiblichen Endrohrs (12), das zum Inneren des weiblichen Endrohrs umgelegt ist, gebildet ist, wobei der Rand dieses Endes dazu vorgesehen ist, den Durchgang der Haken in umgekehrte Richtung nach dem Ineinanderstecken der Rohre zu verhindern.

4. Vorrichtung zum Zusammenbau nach Anspruch 3, **dadurch gekennzeichnet, dass** die Feststellvorrichtung einen konischen Teil (124) umfasst, der den Rand des Endes einschließt.

5. Vorrichtung zum Zusammenbau nach einem der vorhergehenden Ansprüche, **dadurch gekennzeichnet, dass** die Haken (116) Ausstülpungen sind, die am Ende des männlichen Endrohrs (11) ausgebildet und zum Äußeren dieses Rohrs gewölbt sind.

6. Vorrichtung zum Zusammenbau nach einem der Ansprüche 4 oder 5, **dadurch gekennzeichnet, dass** die Kerben (125) in dem konischen Teil (124) ausgebildet sind.

7. Vorrichtung zum Zusammenbau nach einem der vorhergehenden Ansprüche, **dadurch gekennzeichnet, dass** das weibliche Endrohr (12) Kennzeichnungen (126) für die Kerben und das männliche Endrohr (11) Kennzeichnungen (126) für die Haken (116) umfasst, wobei diese Kennzeichnungen (126) dazu vorgesehen sind, durch ihre Ausrichtung die Übereinstimmung der Kerben (125) und der Haken (116) zu ermöglichen, um ein mögliches Trennen der Rohre zu erleichtern.
